# EUROPÄISCHE PATENTANMELDUNG

(11) **EP 1 388 615 A1**
(43) Veröffentlichungstag der Anmeldung: **11.02.2004**
(21) Anmeldenummer: 02405677.2
(22) Anmeldetag: 06.08.2002
(51) Int. Cl.: E02D 1/06, E21B 43/112, G01N 1/10, E21B 49/06, E21B 49/10, E21B 47/12

(54) **Verfahren und Vorrichtung zur Bodenuntersuchung**

(71) Anmelder: ABB Immobilien AG, 5400 Baden (CH)
(72) Erfinder: Wotschke, Peter, 8049 Zürich (CH); Ehrbar, Alfred, 8046 Zürich (CH); Friedel, Sven, 8049 Zürich (CH)
(74) Vertreter: ABB Patent Attorneys

(57) **Zusammenfassung**

Verfahren zur Bodenuntersuchung, bei welchem zur Durchführung einer Messung und/oder zur Entnahme einer Boden-, Gas- und/oder Flüssigkeitsprobe ein Bohrloch gebohrt wird, wobei erfindungsgemäss vor der Durchführung der Messung oder der Entnahme der Boden- und/oder Flüssigkeitsprobe das Bohrloch mit einem Rohr (1) verrohrt wird, dessen Wandung mindestens einen leicht durchstossbaren Bereich (11) aufweist, und zur Durchführung der Messung oder der Entnahme der Boden-, Gas- und/oder Flüssigkeitsprobe der leicht durchstossbare Bereich (11) mit einer Mess- und/oder Probensonde (5) durchstossen wird.

## Beschreibung

### Technisches Gebiet

Die Erfindung bezieht sich auf das Gebiet der Messtechnik. Sie umfasst ein Verfahren, ein Sondiersystem und einen Messkopf zur Bodenuntersuchung nach dem Oberbegriff der unabhängigen Patentansprüche.

### Stand der Technik

Bedingt durch eine weltweit stattfindende Verstädterung werden in immer grösserem Masse ehemalige Industrieareale, die früher einmal an Stadträndern oder in der Umgebung von Städten gelegen waren, in die Städte integriert und neuen Nutzungen, insbesondere als Wohn-, Geschäfts- oder Freizeitflächen zugeführt. Ein Erdreich in einem Untergrund solcher ehemaliger Industrieareale weist jedoch häufig Kontaminationen mit schädlichen oder giftigen Substanzen auf. Um eine gesundheitliche Gefährdung von Mensch und Tier als auch weitergehende Umweltschäden vermeiden zu können, ist eine gezielte und genaue Untersuchung auf Kontaminationen sinnvoll, häufig auch gesetzlich vorgeschrieben.

Eine Entnahme von Proben des Erdreichs oder aus dem Erdreich, beispielsweise in Form von Bohrungen in Verbindung mit einer Entnahme von Bohrkernen oder Flüssigkeits-/Gasproben, und eine anschliessende Analyse dieser Proben stellt ein technisch vergleichsweise einfaches, direktes Verfahren einer Ermittlung von Kontaminationen dar. Dies kann jedoch sehr umfangreich und kostspielig werden, wenn ein grosses Areal untersucht werden muss. Weiterhin besteht die Gefahr, dass kleinflächige Kontaminationen, beispielsweise in Form vergrabener Fässer oder anderer kompakter Abfallstoffe, übersehen werden, wenn die Bohrungen nicht dicht genug erfolgen. Je dichter andererseits die Bohrungen vorgenommen werden, desto kostenintensiver wird die gesamte Untersuchung, so dass eine absolut verlässliche Untersuchung des Untergrundes zu betriebswirtschaftlich akzeptablen Bedingungen mit direkten Verfahren letztendlich nicht möglich ist.

Um hier Abhilfe zu schaffen, bedient man sich verschiedener indirekter Verfahren, die auf geophysikalischen Methoden basieren. Dabei werden bestimmte physikalische Parameter des Erdreichs gemessen. Eine besondere Bedeutung haben dabei geoelektrische Verfahren. Ein Beispiel für ein solches Verfahren ist die elektrische Widerstandstomographie (electrical resistivity tomography, ERT), bei der eine dreidimensionale Verteilung elektrischer Widerstandswerte des Erdreichs in einem zu untersuchenden Bereich im Untergrund ermittelt wird. Dies geschieht dadurch, dass an der Oberfläche und den seitlichen Rändern des Bereiches eine Anzahl von Elektroden verteilt wird. An den seitlichen Rändern werden dabei Elektroden möglichst in verschiedenen Tiefen bis zu einer interessierenden Maximaltiefe verteilt. Dies geschieht zweckmässigerweise durch Versenken der Elektroden in Bohrlöchern. Danach werden mit Hilfe einer Auswerteeinheit, an welche die Elektroden angeschlossen werden, zunächst für alle Elektrodenpaare integrale Widerstandswerte zwischen den zwei Punkten, an denen sich die entsprechenden Elektroden befinden, ermittelt. Mittels geeigneter mathematischer Methoden kann aus den so gewonnen integralen Widerstandswerten die dreidimensionale Verteilung der elektrischen Widerstandswerte rekonstruiert werden. Unter der Annahme, dass Kontaminationen diese Verteilung beeinflussen, lassen sich somit Rückschlüsse auf Art und Ausmass der Kontaminationen ziehen. Dabei ist im Allgemeinen eine Kombination mit direkten Verfahren, wie sie weiter oben beschrieben wurden, notwendig.

Ein nichttriviales Problem bei geoelektrischen Verfahren ist die Erzielung eines hinreichend guten elektrischen Kontakts zwischen Elektrode und Erdreich. Blosses Herablassen von Elektroden in ein Bohrloch stellt im allgemeinen keinen solchen Kontakt her. Aus diesem Grund werden die Bohrlöcher nach einem Einbringen der Elektroden häufig zugeschüttet. Auf diese Weise steht jedoch das Bohrloch für etwaige Untersuchungen oder Messungen anderer Art nicht mehr zur Verfügung. Auch können die Elektroden nicht an anderer Stelle weiterverwendet werden. Problematisch ist bei im Erdreich verbleibenden Elektroden weiterhin, dass diese ebenfalls im Rahmen der Untersuchung und Analyse eventuell vorzunehmende Radarmessungen nachteilig beeinflussen.

Im Erdreich verbleibende Elektroden sind weiterhin einer Korrosion ausgesetzt, so dass sie für Untersuchungen über einen längeren Zeitraum, d.h. von mehreren Monaten oder gar Jahren, nicht zuverlässig verwendbar sind. Ein derartiges Monitoring ist aber häufig notwendig: Ein weiterer, häufig wichtiger Aspekt von Kontaminationen ist nämlich eine zeitliche Veränderung derselben. So kann unter Umständen zumindest ein Teil der Substanzen, die eine Kontamination ausmachen, im Laufe der Zeit durch natürliche Prozesse abgebaut werden und/oder zerfallen. Es ist jedoch auch möglich, dass sich die Substanzen mit der Zeit ausbreiten, insbesondere wenn regelmässige Grundwasserschwankungen im betroffenen Untergrund zu verzeichnen sind und/oder Behältnisse, die die Substanzen umgeben, nach und nach zunehmend undicht werden.

Aus diesem Grund wäre es sinnvoll, Bohrlöcher, die zur Probenentnahme oder zur Einbringung von Messsonden gebohrt werden, zu verrohren. Eine Verrohrung verhindert, dass sich das Bohrloch im Laufe der Zeit schliesst, beschränkt jedoch auch die Möglichkeiten, weitere Untersuchungen vorzunehmen. Insbesondere eine Verrohrung mit Metallrohren erschwert eine Probenentnahme durch die Verrohrung erheblich. So wird in US 5065619 vor der Probenentnahme mit einer kleinen Sprengladung ein Loch in eine Rohrwandung gesprengt. US 5765637 offenbart eine Vorrichtung zum Perforieren einer Wandung, bei welcher unter Einsatz von Schiesspulver ein Projektil durch die Wandung geschossen wird. Zwar kann eine metallische Verrohrung direkt als Elektrode für geoelektrische Messungen, insbesondere ERT verwendet werden, wie in US 5914603 beschrieben ist. Aufgrund einer elektrischen Leitfähigkeit der metallischen Verrohrung verfügt man dabei aber nur über eine Elektrode pro Bohrloch, wobei diese über die gesamte Tiefe des Bohrlochs ausgedehnt ist. Im Vergleich zum weiter oben beschriebenen ERT-Verfahren mit Elektroden, die in unterschiedlichen Tiefen angebracht werden, ermöglicht dies, wenn überhaupt, nur eine eingeschränkte Tiefenauflösung bei einer Ermittlung einer Widerstandsverteilung. Die dabei im Boden verbleibenden metallischen Installationen haben zudem, wie bereits beschrieben, negativen Einfluss auf etwaig vorzunehmende Radarmessungen und sind deswegen unter Umständen unerwünscht.

### Darstellung der Erfindung

Es ist somit Aufgabe der Erfindung, ein Verfahren anzugeben, welches Untersuchungen eines Erdreichs in einem Untergrund eines Areals auf Kontaminationen, insbesondere wiederholte Untersuchungen über einen längeren Zeitraum, vorzugsweise über mehrere Monate oder Jahre, ermöglicht, ohne dass wiederholte Bohrungen vorgenommen werden müssen und vorzugsweise ohne dass metallische Installationen im Erdreich verbleiben. Es ist weiter Aufgabe der Erfindung, ein Sondiersystem und einen Messkopf anzugeben, mit welchem das Verfahren einfach und effizient durchgeführt werden kann.

Diese und weitere Aufgaben werden durch ein Verfahren, ein Sondiersystem und einen Messkopf der eingangs genannten Art mit den Merkmalen der unabhängigen Patentansprüche gelöst. Weitere vorteilhafte Ausgestaltungen der Erfindung sind in den abhängigen Ansprüchen angegeben.

Beim erfindungsgemässen Verfahren wird ein Bohrloch, welches sich an einer Stelle befindet, an welcher eine Messung durchgeführt oder eine Boden, Gas- und/oder Flüssigkeitsprobe entnommen werden soll, oder welches sich an einer von zwei Stellen befindet, zwischen welchen eine Messung vorgenommen werden soll, mit einem Rohr verrohrt, dessen Wandung mindestens einen leicht durchstossbaren Bereich aufweist, welcher insbesondere ohne Einsatz pyrotechnischer Mittel durchstossbar ist. Der leicht durchstossbare Bereich kann dabei aus einem weichen Material, wie beispielsweise Hartschaum oder Gummi, bestehen. Er kann jedoch auch aus einem oder mehreren Löchern und/oder Schlitzen gebildet sein, welche in der Wandung eines Rohrs aus beliebigem Material, vorzugsweise aus Kunststoff, insbesondere PVC oder PET, oder aber auch aus Metall, ausgebildet sind. Bei Verwendung geeigneter Mess- oder Probensonden wird es dadurch möglich, bei der Durchführung der Messung oder der Entnahme der Boden, Gas- und/oder Flüssigkeitsprobe mit einer Mess- und/oder Probensonde durch den leicht durchstossbaren Bereich hindurch in ein das Rohr umgebende Erdreich vorzudringen. Durch die Verrohrung wird das Bohrloch stabilisiert. Dies hat den Vorteil, dass Messungen oder Probenentnahmen auch noch nach mehreren Monaten oder Jahren durchgeführt werden können, ohne dass erneute Bohrungen vorgenommen werden müssten.

In einer vorteilhaften Weiterbildung des erfindungsgemässen Verfahrens wird ein Messkopf mit mindestens einem ausfahrbaren Sondenspiess, der als Mess- und/oder Probensonde dient, an eine derartige Position im Rohr verbracht, dass der Sondenspiess bei einem Ausfahren auf den leicht durchstossbaren Bereich trifft und durch diesen hindurch in das das Rohr umgebende Erdreich vordringen kann. In dieser Position wird der Sondenspiess ausgefahren, die Messung durchgeführt und/oder die Probe genommen und schliesslich der Sondenspiess wieder zurückgezogen, wodurch das Verfahren besonders einfach und effizient wird.

Das erfindungsgemässe Sondiersystem umfasst mindestens einen Messkopf mit mindestens einem ausfahrbaren Sondenspiess und mindestens ein Rohr zur Verrohrung von Bohrlöchern. Die Wandung des Rohrs weist dabei mindestens einen leicht durchstossbaren Bereich auf. Ein derartiges Sondiersystem besitzt den Vorteil, dass es eine besonders einfache und effiziente Durchführung des erfindungsgemässen Verfahrens ermöglicht.

In einer bevorzugten Weiterbildung des erfindungsgemässen Sondiersystems ist das mindestens eine Rohr aus einer Anzahl von Segmenten zusammengesetzt, wobei der mindestens eine leicht durchstossbare Bereich von mindestens einem ersten, leicht durchstossbaren Segment gebildet wird. Vorteilhaft können weitere erste, leicht durchstossbare Segmente so im Rohr platziert werden, dass sie nach einer Installation des Rohres im Bohrloch in einer vorgesehenen Tiefe zu liegen kommen. Eine Verrohrung mit einem aus einer Anzahl von Segmenten zusammengesetzten Rohr hat ferner den Vorteil, dass die Länge des Rohres einer Gesamttiefe des Bohrlochs oder einer gewünschten maximalen Messtiefe angepasst werden kann.

In einer bevorzugten Weiterbildung des erfindungsgemässen Sondiersystems weist der Messkopf mindestens einen weiteren Sondenspiess auf, der gleichzeitig mit dem ersten Sondenspiess ausfahrbar ist und beim Ausfahren auf den ersten, oder, wenn sich der Messkopf in geeigneter Position befindet, auf einen zweiten oder weiteren leicht durchstossbaren Bereich in der Wandung des Rohrs trifft.

In einer bevorzugten Weiterbildung des erfindungsgemässen Sondiersystems weist die Verrohrung Führungsmittel und der Messkopf mit den Führungsmitteln wechselwirkende Ausrichtungsmittel auf, die eine definierte azimutale Ausrichtung des Messkopfes relativ zum Rohr bewirken. Dies ist vorteilhaft, wenn der leicht durchstossbare Bereich in azimutaler Richtung beschränkt ist, d.h. nicht um das ganze Rohr herum verläuft, insbesondere wenn der leicht durchstossbare Bereich durch Löcher und/oder Schlitze gebildet wird.

In einer bevorzugten Weiterbildung des erfindungsgemässen Sondiersystems umfasst dieses eine Anzahl von Rohren, wobei die Wandung eines jeden Rohrs mindestens einen leicht durchstossbaren Bereich aufweist. Die Rohre sind zur Verrohrung in einer gleichen Anzahl von Bohrlöchern verteilt, welche über ein Areal verteilt angeordnet sind, so dass sich in jedem Bohrloch ein Rohr befindet.

Der erfindungsgemässe Messkopf zur Bodenuntersuchung umfasst mindestens einen ausfahrbaren Sondenspiess, welcher zwischen einer ersten, versenkten Position und einer zweiten, ausgefahrenen Position verschiebbar ist. Zu diesem Zweck weist der Messkopf ein erstes Antriebsmittel zum Ausfahren des Sondenspiesses aus der ersten, versenkten Position in die zweite, ausgefahrene Position und ein zweites Antriebsmittel zum Zurückziehen des Sondenspiesses aus der zweiten, ausgefahrenen Position in die erste, versenkte Position auf. Weiter umfasst der Messkopf elektrische Verbindungsmittel, die einen elektrischen Anschluss des Sondenspiesses, insbesondere an eine geoelektrische Auswerteeinheit, ermöglichen. Der verschiebbare Sondenspiess gewährleistet in der zweiten, ausgefahrenen Position einen guten elektrischen Kontakt zum Erdreich, erlaubt jedoch gleichzeitig eine vollständige Entfernung metallischer Installationen nach erfolgter Messung. Jedes der beiden Antriebsmittel kann hydraulischer, pneumatischer, elektrischer oder mechanischer Art sein. Eine Antriebsenergie kann dabei vorteilhaft von ausserhalb des Bohrlochs zugeführt werden. Vorteilhaft wird dabei Druckluft eingesetzt, weil dadurch eine Einschleusung von Verschmutzungen durch den Messkopf vermieden oder zumindest minimiert wird. Vorzugsweise kann der Messkopf aber auch einen Energiespeicher, beispielsweise in Form einer Batterie oder einer kleinen Druckluftflasche, umfassen. Vorteilhaft können das erste und zweite Antriebsmittel auch identisch sein, wobei geeignete hydraulische, pneumatische, elektrische oder mechanische Steuerungsmittel vorzusehen sind, um wahlweise das Ausfahren oder Zurückziehen des Sondenspiesses zu ermöglichen.

In einer bevorzugten Weiterbildung des erfindungsgemässen Messkopfs umfasst der Messkopf Mittel zur Messung chemischer oder physikalischer Grössen, beispielsweise geochemischer Milieuparameter wie Temperatur oder pH-Wert, oder zur Durchführung optischer in-situ Analysen, insbesondere von Lumineszenzanalysen wie Ramann-Spektroskopie oder laserinduzierter Fluoreszenz. Vorzugsweise ist dabei ein Sensor im Messkopf, vorzugsweise im Sondenspiess, vorgesehen, welcher die entsprechenden Grössen bestimmen oder optische in-situ Analysen durchführen kann. Eine für die Durchführung von Lumineszenzanalysen notwendige Lichtquelle kann dabei ebenfalls im Messkopf vorgesehen sein, eine Zuführung von Licht kann jedoch auch mittels eines ersten Lichtleiters, insbesondere eines Glasfaserkabels, von ausserhalb, insbesondere von einer Auswerteeinheit auf der Erdoberfläche, erfolgen. Eine vom Erdreich emittierte Lumineszenz kann vorzugsweise ebenfalls über den ersten Lichtleiter, vorteilhaft auch über einen zweiten Lichtleiter, zur Auswerteeinheit übertragen werden.

Diese und weitere Aufgaben, Vorteile und Merkmale der Erfindung werden aus der nachfolgenden, detaillierten Beschreibung eines bevorzugten Ausführungsbeispiels der Erfindung in Verbindung mit den Zeichnungen offensichtlich.

### Kurze Beschreibung der Figuren

Es zeigen schematisch:
Fig. 1 einen Querschnitt durch einen erfindungsgemässen Messkopf,
Fig. 2 eine Detailansicht einer bevorzugten Weiterbildung des erfindungsgemässen Messkopfs,
Fig. 3 eine Detailansicht einer bevorzugten Weiterbildung des erfindungsgemässen Messkopfs,
Fig. 4 eine weitere bevorzugte Weiterbildung des erfindungsgemässen Messkopfs,
Fig. 5 ein erfindungsgemässes Sondiersystem im Querschnitt,
Fig. 6 einen Schnitt durch eine bevorzugte Weiterbildung des Sondiersystems entlang der Linie A-A' aus Fig. 5.

Die in der Zeichnung verwendeten Bezugszeichen und deren Bedeutung sind in der Bezugszeichenliste zusammengefasst. Grundsätzlich bezeichnen gleiche Bezugszeichen gleiche Teile.

### Wege zur Ausführung der Erfindung

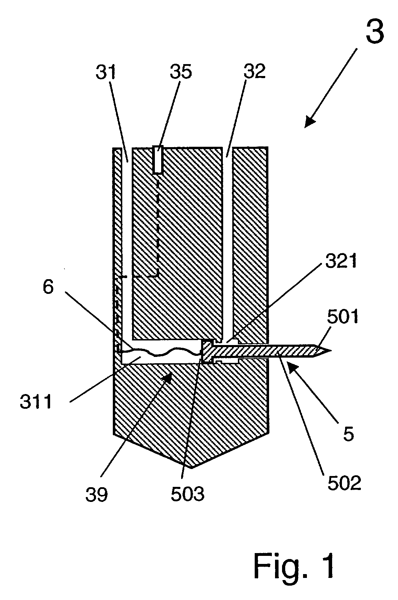

Fig. 1 zeigt schematisch einen Querschnitt durch einen erfindungsgemässen Messkopf 3. Ein Sondenspiess 5 mit einem Sondenspiess-Hals 502 und einer Sondenspiess-Spitze 501 ist in einem Sondenkanal 39 derart gelagert, dass er aus einer ersten, versenkten Position in eine zweite, ausgefahrene Position verschiebbar ist. In Fig. 1 ist der Sondenspiess 5 dabei in der zweiten, ausgefahrenen Position gezeigt. Als elektrisches Verbindungsmittel dient ein Verbindungskabel 6, welches mit dem Sondenspiess 5 elektrisch leitend verbunden und innerhalb des Messkopfs 3 zu einer Anschlussbuchse 35 geführt ist. Dabei ist das Anschlusskabel 6 so ausgelegt, dass es eine Bewegung des Sondenspiesses 5 nicht beeinträchtigt und umgekehrt durch eine solche Bewegung nicht beeinträchtigt wird. An Stelle eines direkt mit dem Sondenspiess 5 verbundenen Anschlusskabels 6 können vorteilhaft auch Schleif-, Feder- oder Druckkontakte zur elektrischen Kontaktierung vorgesehen werden.

Eine Verschiebung von der ersten, versenkten Position in die zweite, ausgefahrene Position erfolgt beim gezeigten Messkopf 3 pneumatisch. Dabei wird Druckluft über einen ersten Druckluftkanal 31 in eine erste Druckluftkammer 311 geleitet, welche zusammen ein erstes Antriebsmittel bilden. Eine Rückverschiebung aus der zweiten, ausgefahrenen Position in die erste, versenkte Position wird ebenfalls pneumatisch bewirkt, indem Druckluft über einen zweiten Druckluftkanal 32 in eine zweite Druckluftkammer 321 gepresst wird. Zweiter Druckluftkanal 32 und zweite Druckluftkammer 321 bilden dabei ein zweites Antriebsmittel. Eine Erzeugung von Druckluft, eine Zuführung über erste und zweite Druckluftleitungen und ein Anschluss der ersten und zweiten Druckluftleitungen an den Messkopf 3 erfolgen dabei in an sich bekannter Art und Weise. Vorteilhaft kann die Druckluft auch nur über eine einzelne Druckluftleitung zugeleitet werden, wobei dann im oder am Messkopf 3 ein oder mehrere geeignete Ventile und Steuerungsmittel vorzusehen sind, um die Druckluft wahlweise in die erste Druckluftkammer 311 oder in die zweite Druckluftkammer 321 leiten zu können. Vorzugsweise wird dabei Druckluft mit einem Druck von angenähert einigen bar bis einigen zehn bar, vorzugsweise von angenähert 10bar bis angenähert 20bar, verwendet. Der Sondenspiess 5 weist vorteilhaft einen Sondenspiess-Fuss 503 mit einer gegenüber einem ersten Querschnittsfläche des Sondenspiess-Halses 502 vergrösserten zweiten Querschnittsfläche auf, um bei einem vorgegebenen Druck die Kraft auf den Sondenspiess 5 und damit die Sondenspiess-Spitze 501 zu erhöhen. Die erste Querschnittsfläche des Sondenspiess-Halses 502 beträgt vorzugsweise angenähert einige Quadratmillimeter bis einige hundert Quadratmillimeter, vorzugsweise angenähert 30 Quadratmillimeter. Die zweite Querschnittsfläche des Sondenspiess-Fusses 503 beträgt vorzugsweise angenähert einige zehn Quadratmillimeter bis einige zehn Quadratzentimeter, vorzugsweise angenähert einige Quadratzentimeter, vorzugsweise angenähert 3 Quadratzentimeter. Die Sondenspiess-Spitze 501, vorzugsweise der gesamte Sondenspiess 5, ist vorzugsweise aus Edelstahl gefertigt, es können jedoch vorteilhaft auch andere Materialien eingesetzt werden. Die Sondenspiess-Spitze 501 wird vorzugsweise durch ein konisches Anschleifen in an sich bekannter Weise gebildet, vorzugsweise mit einem Spitzenwinkel von angenähert 45° bis 75°, vorzugsweise angenähert 60°.

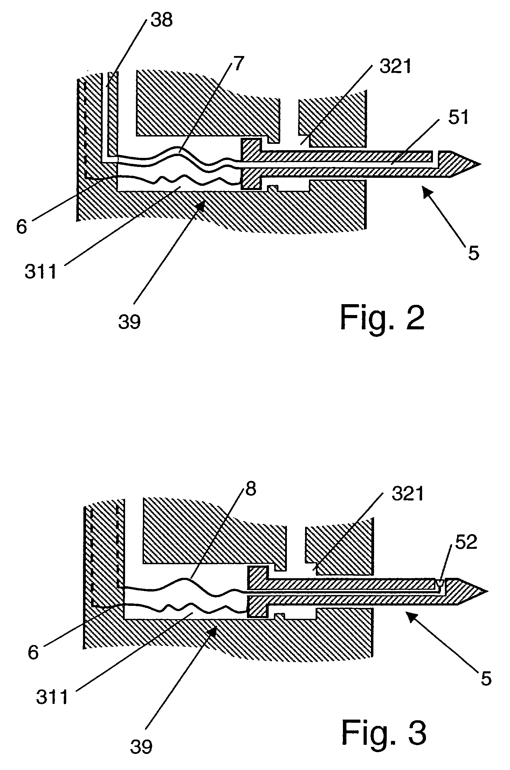

Fig. 2 zeigt schematisch eine Detailansicht einer bevorzugten Weiterbildung des erfindungsgemässen Messkopfs 3. Der Sondenspiess 5 weisst dabei einen im wesentlichen axial verlaufenden ersten Probenkanal 51 auf, durch welchen Flüssigkeits- oder Gasproben genommen werden können. Ein Anschlussschlauch 7, welcher mit dem Sondenspiess 5 flüssigkeits- und gasdicht verbunden ist, ist dabei durch die erste Druckluftkammer 311 zu einem zweiten Probenkanal 38 geführt. Dabei ist der Anschlussschlauch 7 so ausgelegt, dass er eine Bewegung des Sondenspiesses 5 nicht beeinträchtigt und umgekehrt durch eine solche Bewegung nicht beeinträchtigt wird. An Stelle des Anschlussschlauches 7 kann vorteilhaft auch ein Röhrchen vorgesehen werden, auf welchem der Sondenspiess 5 sitzt und/oder welches teleskopisch verlängerbar und verkürzbar ist. Für eine Entnahme von Flüssigkeits- oder Gasproben ist vorteilhaft der zweite Probenkanal 38 vorteilhaft zu einem Probenentnahmeanschluss an einer Aussenseite des Messkopfes 3 geführt. Vorteilhaft kann aber im Messkopf 3 auch eine Pumpe und eine oder mehrere Probenkammern vorgesehen sein, in welche Proben gepumpt und analysiert und/oder bis zu einem späteren Zeitpunkt gespeichert werden können.

Fig. 3 zeigt schematisch eine Detailansicht einer bevorzugten Weiterbildung des erfindungsgemässen Messkopfs 3. Bei dieser Weiterbildung weist der Sondenspiess 5 einen Sensor 52 auf, der einer Bestimmung einer chemischen oder physikalischen Grösse dient. Ein Sensor-Anschlusskabel 8 ermöglicht einen Anschluss an eine Auswerteeinheit 9, die sich vorzugsweise an der Erdoberfläche befindet. Der Sensor 52 ist in einer Vertiefung hinter der Sondenspiess-Spitze 501 des Sondenspiesses 5 angeordnet, so dass er beim Ausfahren des Sondenspiesses 5 an einem Untersuchungsort keiner Druckbelastung ausgesetzt ist. Mögliche Schäden am Sensor 52 werden dadurch vermieden.

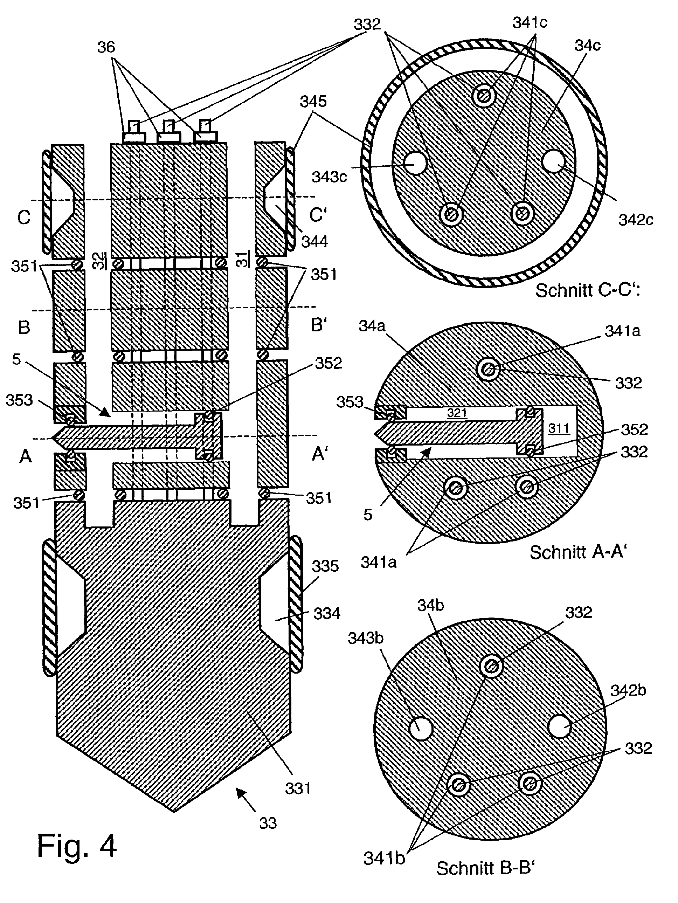

Fig. 4 zeigt schematisch eine weitere bevorzugte Weiterbildung des erfindungsgemässen Messkopfs 3. Der Messkopf 3 ist dabei modular auf einem Stahlgrundkörper 33 aufgebaut, welcher ein Kopfstück 331 und mehrere aus diesem herausragende, in einer axialen Richtung verlaufende, Stahlstangen 332 umfasst. Auf die Stahlstangen 332 sind drei Module 34a, 34b, 34c aus Kunststoff, vorzugsweise PVC aufgesteckt, in welchen zu diesem Zweck erste Bohrungen 341a, 341b, 341c vorgesehen sind. Die Module 34a, 34b, 34c sind mit Muttern 36 auf den Stahlstangen 332 verschraubt. Zweite Bohrungen 342a, 342b, 342c und dritte Bohrungen 343a, 343b, 343c bilden den ersten und zweiten Druckluftkanal 31, 32. Erste O-Ringe 351 aus Gummi dichten die zweiten Bohrungen 342a, 342b, 342c und die dritten Bohrungen 343a, 343b, 343c zwischen den Modulen 34a, 34b, 34c und dem Stahlgrundkörper 33 ab. Ein erstes Modul 34a enthält den Sondenspiess 5 im Sondenkanal 39. Ein zweiter O-Ring 352 dichtet die erste Druckluftkammer 311 gegen die zweite Druckluftkammer 321 ab. Ein dritter O-Ring 353 dichtet die zweite Druckluftkammer 321 nach aussen ab. Das dritte Modul 34c und das Kopfstück 331 des Stahlgrundkörpers 33 weisen Verjüngungen 344, 334 auf, über welche Pressluftschläuche 345, 335 geschoben sind. In der Abbildung nicht gezeigte erste Ventile im Messkopf 3 bewirken, dass sich die Schläuche 335, 345 aufblasen, wenn Druckluft über den ersten Druckluftkanal 31 zugeführt wird, wobei eine Volumenausdehnung im wesentlichen in einer radialen Richtung erfolgt. Bei einem Einsatz des Messkopfs 3 in einem Bohrloch, insbesondere in einem verrohrten Bohrloch, wird so der Messkopf 3 bei einem Ausfahren des Sondenspiesses 5 arretiert und zentriert. In der Abbildung ebenfalls nicht gezeigte zweite Ventile im Messkopf 3 bewirken, dass sich die Schläuche 335, 345 wieder entleeren, wenn Druckluft über den zweiten Druckluftkanal 32 zugeführt wird.

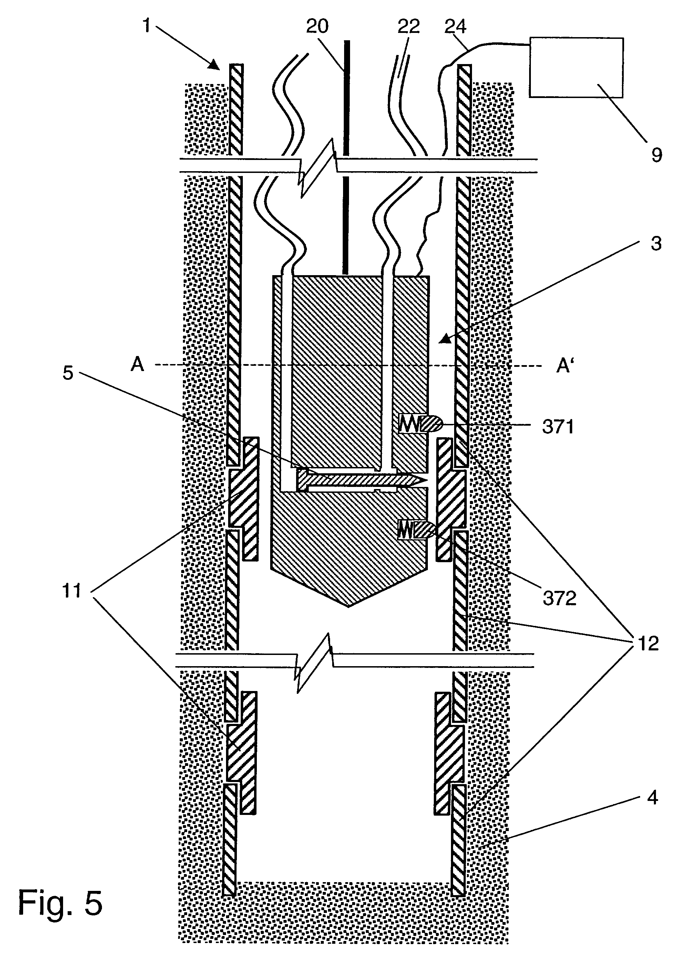

Fig. 5 zeigt schematisch ein erfindungsgemässes Sondiersystem im Querschnitt. Ein Rohr 1, welches Hartschaumsegmente 11 als erste Segmente, welche leicht durchstossbar sind, und Kunststoffsegmente 12, vorzugsweise aus PVC oder PET, als zweite Segmente umfasst, wobei die Hartschaumsegmente 11 und die Kunststoffsegmente 12 abwechselnd aneinander gesteckt sind, wurde dabei in ein senkrecht im Erdreich 4 verlaufendes Bohrloch eingebracht, um somit das Bohrloch zu verrohren. Ein in das Rohr 1 einführbarer Messkopf 3 ist mittels einem an ihm befestigten Halteseil 20 auf eine gewünschte Tiefe im Bohrloch verbringbar. Der Messkopf 3 ist über ein Steuerkabel 24 an die Auswerteeinheit 9 auf der Erdoberfläche angeschlossen. Die Auswerteeinheit 9 nimmt neben den eigentlichen Messungen, für welche das Steuerkabel 24 als elektrisches Anschlussmittel dient, vorzugsweise verschiedene Steuerungsfunktionen vor. Der Messkopf 3 umfasst einen Sondenspiess 5, welcher seitlich ausfahrbar ist. Zwei Taster 371, 372 dienen als Detektor einem Auffinden der Hartschaumsegmente 11. Befindet sich der Sondenspiess in einer geeigneten Höhe, um eines der Hartschaumsegmente 11 zu durchstossen, werden die beiden Taster 371, 372 in den Messkopf 3 hineingedrückt und generieren ein entsprechendes Detektionssignal, welches über das Steuerkabel 24 an die Auswerteeinheit 9 geleitet wird. Erste und zweite Druckluftleitungen 21, 22 dienen zur Zuführung von Druckluft in den ersten bzw. zweiten Druckluftkanal 31, 32 und die erste bzw. zweite Druckluftkammer 311, 321.

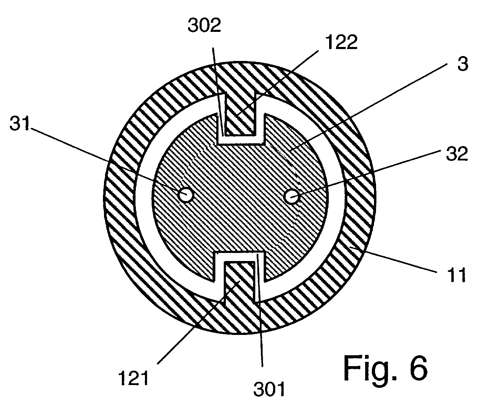

Fig. 6 zeigt schematisch einen Schnitt durch eine bevorzugte Weiterbildung des Sondiersystems entlang der Linie A-A' aus Fig. 5. Parallel zu einer axialen Richtung der Kunststoffsegmente 12 verlaufende Schienen 121, 122 als Führungsmittel und in einer Längsrichtung am Messkopf 3 als Ausrichtungsmittel verlaufende Aussparungen 301, 302 bewirken durch ein Wechselwirken eine definierte azimutale Ausrichtung des Messkopfs 3.

Zur Durchführung des erfindungsgemässen Verfahrens wird zunächst mindestens ein Bohrloch gebohrt und mit einem Rohr 1 verrohrt, welches aus Kunststoffsegmenten 12 und leicht durchstossbaren Hartschaumsegmenten 11 besteht, wie in Fig. 5 gezeigt ist. Ein erster Messkopf 3 mit einem ausfahrbaren Sondenspiess 5 wird an einem Halteseil 20 auf eine solche Tiefe im Rohr verbracht, dass der Sondenspiess 5 beim Ausfahren auf eines der Hartschaumsegmente 11 stösst. Über die erste Druckluftleitung 21 wird Druckluft zugeführt, wodurch der Sondenspiess 5 ausgefahren wird und das Hartschaumsegment 11 durchstösst. Nachdem eine Messung durchgeführt und/oder eine Stoffprobe entnommen wurde, wird Druckluft über die zweite Druckluftleitung 22 zugeführt, wodurch der Sondenspiess 5 wieder zurückgezogen wird.

In einer bevorzugten Weiterentwicklung des erfindungsgemässen Verfahrens, insbesondere zur Durchführung geoelektrischer Messungen wie elektrischer Widerstandstomographie, wird eine Anzahl weiterer Bohrlöcher über ein Areal verteilt gebohrt und jedes Bohrloch mit einem Rohr 1 verrohrt. Ein erster Messkopf 3 und ein weiterer Messkopf 3, die an eine gemeinsame Auswerteeinheit 9 angeschlossen sind, werden in der oben beschriebenen Weise in je eines von zweien der Bohrlöcher hinabgelassen und der Sondenspiess 5 des ersten Messkopfs 3 und des weiteren Messkopfs 3 wird ausgefahren. Sodann kann ein elektrischer Widerstandswert des Erdreichs zwischen den beiden Sondenspiessen 3 ermittelt werden.

### Bezugszeichenliste

- 1: Rohr
- 11: Hartschaumsegmente, erste Segmente
- 12: Kunststoffsegmente, zweite Segmente
- 121, 122: Schiene, Führungsmittel
- 20: Halteseil
- 21, 22: Erste, zweite Druckluftleitung
- 24: Steuerkabel
- 3: Messkopf
- 301, 302: Aussparung, Ausrichtungsmittel
- 31, 32: Erster, zweiter Druckluftkanal
- 311, 321: Erste, zweite Druckluftkammer
- 33: Stahlgrundkörper
- 331: Kopfstück
- 332: Stahlstangen
- 334, 344: Verjüngung
- 335, 345: Pressluftschlauch
- 34a, 34b, 34c: Module
- 341a, 341b, 341c: Erste Bohrungen
- 342a, 342b, 342c: Zweite Bohrungen
- 343a, 343b, 343c: Dritte Bohrungen
- 35: Anschlussbuchse
- 36: Mutter
- 351, 352, 353: Erste, zweite, dritte O-Ringe
- 371, 372: Taster
- 38: Probenleitung
- 39: Sondenkanal
- 4: Erdreich
- 5: Sondenspiess
- 501: Sondenspiess-Spitze
- 502: Sondenspiess-Hals
- 503: Sondenspiess-Fuss
- 51: Erster Probenkanal
- 52: Sensor
- 6: Verbindungskabel
- 7: Anschlussschlauch
- 8: Sensor-Anschlusskabel
- 9: Auswerteeinheit

## Patentansprüche

1. Verfahren zur Bodenuntersuchung,
- bei welchem zur Durchführung einer Messung und/oder zur Entnahme einer Stoffprobe, insbesondere einer Boden-, Gasund/oder Flüssigkeitsprobe, mindestens ein Bohrloch gebohrt wird,
**dadurch gekennzeichnet, dass**
- vor der Durchführung der Messung oder der Entnahme der Stoffprobe das Bohrloch mit einem Rohr (1) verrohrt wird, dessen Wandung mindestens einen leicht durchstossbaren Bereich (11) aufweist und
- zur Durchführung der Messung oder der Entnahme der Stoffprobe der leicht durchstossbare Bereich (11) mit mindestens einer Mess- und/oder Probensonde (5) durchstossen wird.

2. Verfahren nach Anspruch 1, **dadurch gekennzeichnet, dass**
- das Bohrloch mit einem elektrisch nichtleitenden Rohr (1) verrohrt wird.

3. Verfahren nach Anspruch 1 oder 2, **dadurch gekennzeichnet, dass**
- ein Messkopf (3) mit mindestens einem ausfahrbaren Sondenspiess (5) als Mess- und/oder Probensonde an eine solche Position im Rohr (1) gebracht wird, dass der Sondenspiess (5) bei einem Ausfahren auf den leicht durchstossbaren Bereich (11) trifft,
- der Sondenspiess (5) soweit ausgefahren wird, dass er den leicht durchstossbaren Bereich (11) durchstösst,
- die Messung durchgeführt und/oder die Stoffprobe entnommen wird und anschliessend
- der Sondenspiess (5) wieder eingefahren wird.

4. Verfahren nach Anspruch 3, **dadurch gekennzeichnet, dass**
- der Sondenspiess (5) unter Verwendung von Druckluft, vorzugsweise mit einem Druck von angenähert mindestens 10 bar und angenähert höchstens 20 bar, ein- und ausgefahren wird.

5. Sondiersystem zur Bodenuntersuchung, insbesondere zur Durchführung des Verfahrens nach einem der Ansprüche 1 bis 5, umfassend
- mindestens einen Messkopf (3) mit mindestens einer ausfahrbaren Mess- und/oder Probensonde, insbesondere mindestens einem ausfahrbaren Sondenspiess (5),
- mindestens ein Rohr (1) zur Verrohrung von Bohrlöchern,
**dadurch gekennzeichnet, dass**
- eine Wandung des mindestens einen Rohrs (1) mindestens einen leicht durchstossbaren Bereich (11) aufweist.

6. Sondiersystem nach Anspruch 5, **dadurch gekennzeichnet, dass**
- das mindestens eine Rohr (1) mindestens aus je einer Anzahl erster Segmente (11) und zweiter Segmente (12) zusammengesetzt ist,
- die ersten Segmente (11) mit den zweiten Segmenten (12) durch Hintereinanderstecken verbindbar sind
- die ersten Segmente (11) leicht durchstossbar sind.

7. Sondiersystem nach Anspruch 6, **dadurch gekennzeichnet, dass**
- die ersten Segmente (11) aus Hartschaum und
- die zweiten Segmente (12) aus Kunststoff, vorzugsweise aus PVC, bestehen.

8. Sondiersystem nach Anspruch 6, **dadurch gekennzeichnet, dass**
- der mindestens eine, leicht durchstossbare Bereich (11) von einem Loch oder Schlitz in der Wandung des mindestens einen Rohrs (1) gebildet wird.

9. Sondiersystem nach einem der Ansprüche 5 bis 8, **dadurch gekennzeichnet, dass**
- der Messkopf (3) einen Detektor (371, 372) zum Auffinden des mindestens einen, leicht durchstossbaren Bereichs (11) aufweist.

10. Sondiersystem nach einem der Ansprüche 5 bis 9, **dadurch gekennzeichnet, dass**
- das Rohr (1) Führungsmittel (121, 122) aufweist
- der Messkopf (3) Ausrichtungsmittel (301, 302) aufweist, welche mit den Führungsmitteln (121, 122) wechselwirken und eine definierte azimutale Ausrichtung des Messkopfes (3) im Rohr (1) bewirken.

11. Sondiersystem nach einem der Ansprüche 6 bis 10, **dadurch gekennzeichnet, dass**
- das Sondiersystem eine Anzahl von Rohren (1) umfasst,
- die Rohre (1) zur Verrohrung in einer gleichen Anzahl von Bohrlöchern verteilt sind,
- so dass sich in jedem Bohrloch ein Rohr (1) befindet.

12. Messkopf (3) zur Bodenuntersuchung, insbesondere zur Verwendung in einem Sondiersystem nach einem der Ansprüche 6 bis 12, umfassend
- einen zwischen einer ersten, versenkten Position und einer zweiten, ausgefahrenen Position verschiebbaren Sondenspiess (5),
- ein erstes Antriebsmittel (31, 311) zum Ausfahren des Sondenspiesses (5) aus der ersten, versenkten Position in die zweite, ausgefahrene Position,
- ein zweites Antriebsmittel (32, 321) zum Zurückziehen des Sondenspiesses (5) aus der zweiten, ausgefahrenen Position in die erste, versenkte Position,
**dadurch gekennzeichnet, dass**
- der Messkopf (3) elektrische Verbindungsmittel (6, 35) aufweist, die einen elektrischen Anschluss des Sondenspiesses (5), insbesondere an eine geoelektrische Auswerteeinheit (9), ermöglichen.

13. Messkopf (3) nach Anspruch 12, **dadurch gekennzeichnet, dass**
- der Sondenspiess (5) einen ersten Probenkanal (51) zur Entnahme von Stoffproben, insbesondere von Boden-, Gasund/oder Flüssigkeitsproben, aufweist.

14. Messkopf (3) nach Anspruch 12 oder 13, **dadurch gekennzeichnet, dass**
- der Messkopf (3) Mittel zur Bestimmung einer chemischen oder physikalischen Messgrösse, vorzugsweise einen Sensor (52) im Sondenspiess (5), aufweist.

15. Messkopf (3) nach einem der Ansprüche 12 bis 14, **dadurch gekennzeichnet, dass**
- der Messkopf (3) Mittel zur Durchführung einer optischen Lumineszenzanalyse, vorzugsweise optische Verbindungsmittel zum Anschluss an eine Auswerteeinheit (9), aufweist.
